(19) Europäisches Patentamt
European Patent Office
Office européen des brevets

(11) **EP 2 386 875 A1**

(12) # DEMANDE DE BREVET EUROPEEN

(43) Date de publication:
**16.11.2011 Bulletin 2011/46**

(51) Int Cl.:
***G01S 13/87*** *(2006.01)* ***B64G 1/24*** *(2006.01)*
***H04B 7/185*** *(2006.01)*

(21) Numéro de dépôt: **11163926.6**

(22) Date de dépôt: **27.04.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **30.04.2010 FR 1001867**

(71) Demandeur: **Thales**
**92200 Neuilly Sur Seine (FR)**

(72) Inventeurs:
• **Gayrard, Jean-Didier**
**31270 Cugnaux (FR)**

• **Dervin, Mathieu**
**31000 Toulouse (FR)**
• **Celerier, Bruno**
**06810 Auribeau sur Siagne (FR)**

(74) Mandataire: **Henriot, Marie-Pierre et al**
**Marks & Clerk France**
**Conseils en Propriété Industrielle**
**Immeuble " Visium "**
**22, avenue Aristide Briand**
**94117 Arcueil Cedex (FR)**

(54) **Système distribué de mesure de distance pour la localisation d'un satellite géostationnaire**

(57)    L'invention concerne un système (100) de mesure de distance pour la localisation d'un satellite géostationnaire (SA) équipé d'un transpondeur (22), qui comprend :
- une station centrale (10) émettrice d'un signal de mesure de distance (11),
- au moins une station de mesure (13) réceptrice du signal émis, comportant des moyens de mesure du temps d'arrivée du signal émis et transmis via le transpondeur (22) du satellite,

- les stations centrale et de mesure, de position connues, comportant des moyens de synchronisation avec une base de temps commune (18).

Le transpondeur (22) est celui d'un système (200) de télécommunications par satellite, et a une bande passante B ; la station centrale comprend des moyens d'émission d'un signal (11) spécifique de mesure de distance, distinct des signaux de télécommunications transmis via le transpondeur, à évènements périodiques et à étalement de spectre dont la bande passante est incluse dans B.

FIG.2

EP 2 386 875 A1

**EP 2 386 875 A1**

**Description**

Le domaine de l'invention est celui de la localisation de satellites géostationnaires.

Il est connu de déterminer la position d'un satellite géostationnaire en utilisant un système comportant une station dédiée de mesure de distance entre cette station et le satellite, telle qu'une grande station TCR (acronyme de l'expression anglo-saxonne Telemetry Command and Ranging) émettrice et réceptrice, et un transpondeur spécifique à bord du satellite, inclus dans le sous-système TCR. La mesure de distance, obtenue par la mesure du déphasage induit par la durée de propagation et la traversée du transpondeur TCR du satellite sur une porteuse radiofréquence sinusoïdale ou ton (« tone ranging » en anglais) et associée à une levée d'ambiguïté, est faite de façon périodique (semaine, quinzaine ou mois) selon des procédures bien établies. Entre les campagnes de mesures, la position du satellite est déduite d'un logiciel d'orbitographie. Un tel système est onéreux.

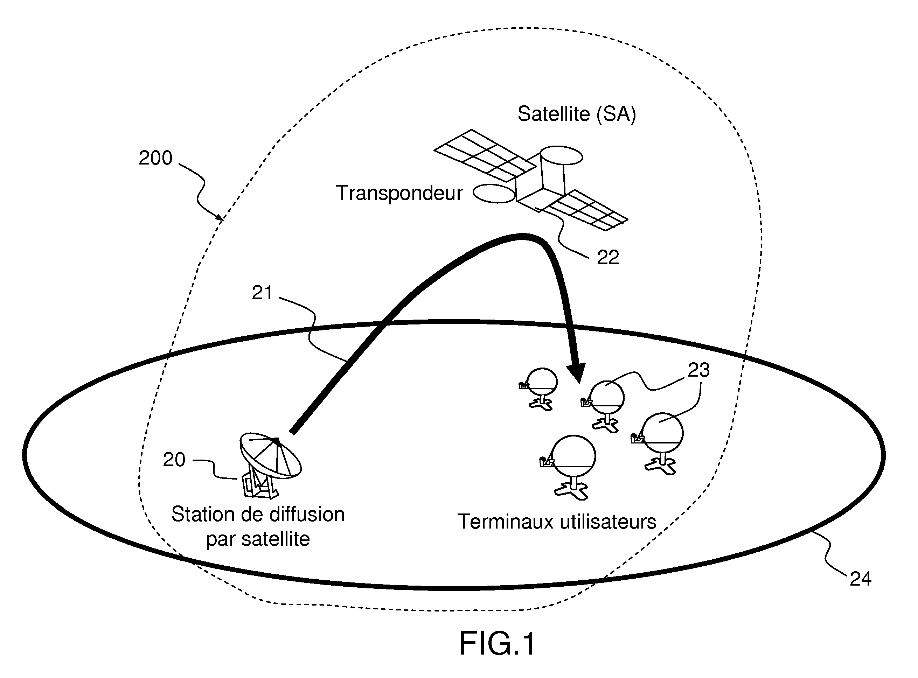

Une autre solution présentée dans le brevet US 6 864 838, consiste à utiliser un système 200 de télécommunications par satellite géostationnaire SA qui comprend comme on le voit figure 1, une station émettrice 20 d'un signal de télécommunications 21 de type vidéo numérique formatée aux standards MPEG-2 et DVB-S, un transpondeur 22 de télécommunications à bord du satellite SA, et plusieurs stations réceptrices 23 du signal de télécommunications, synchronisées avec la station émettrice de manière à avoir une base de temps commune. Les stations émettrices et réceptrices sont dans la couverture 24 du satellite SA. La position du satellite est déduite de la mesure du temps de propagation du signal entre la station émettrice 20 et une station réceptrice 23 via le satellite SA. Ce temps de propagation est mesuré en observant des séquences connues de bits récurrentes ou mots uniques du signal de télécommunications 21. Lorsque ces séquences de bits ou mots uniques sont reconnues par la station réceptrice 23, l'instant de réception correspondant est utilisé avec l'instant d'émission du début de ces séquences de bits et la base de temps, pour calculer le temps de propagation. La connaissance de la position géographique de la station de radiodiffusion 20 et des stations réceptrices 23, et les mesures des distances permettent le calcul de la position du satellite SA par des méthodes mathématiques connues comme la trilatérisation.

Ce système ne fonctionne que si l'opérateur du satellite a accès au signal de télécommunications 21 dans la station de radiodiffusion 20, soit pour connaître l'instant d'émission vers le satellite de mots uniques préexistant dans le signal, soit pour insérer dans le signal des mots uniques à des instants choisis. Cette solution qui est inscrite dans le système de télécommunications par satellite, est donc contrôlée par un opérateur de télécommunications et/ou par un diffuseur et/ou par un opérateur de bouquet (satellite packager) pour ce qui relève du signal de télécommunications 21 et de la station de radiodiffusion 20, et de l'opérateur satellite pour ce qui relève du satellite SA et du transpondeur 22. Cette solution ne peut être utilisée en dehors de l'opérateur de télécommunications et/ou du diffuseur et/ou de l'opérateur de bouquet.

En conséquence, il demeure à ce jour un besoin pour un système donnant simultanément satisfaction à l'ensemble des exigences précitées, notamment en termes de coût et d'indépendance par rapport à un opérateur de télécommunications.

Le système de mesure de distance d'un satellite selon l'invention, est une alternative au système distribué présenté en préambule.

Il comprend une station centrale émettrice d'un signal de mesure de distance, et au moins une station de mesure, réceptrice du signal émis. Les positions de la station centrale et des stations de mesure sont connues. Le transpondeur du satellite est celui d'un système de télécommunications par satellite, utilisé pour transmettre des signaux commerciaux (TV par exemple). Le signal de mesure de distance émis par la station centrale est distinct d'un signal de télécommunication. Ce signal de mesure de distance est étalé en fréquence dans la bande du transpondeur satellite, et sa densité spectrale de puissance est de préférence ajustée pour ne pas perturber les signaux commerciaux. Le signal de mesure de distance est avantageusement synthétisé en utilisant une base de temps et de fréquence commune qui est synchronisée sur la base de temps d'un système de navigation par satellite comme GPS ou Galiléo.

La mesure de distance est ainsi basée sur :

- l'émission par la station centrale d'un signal de mesure de distance qui se superpose aux signaux de télécommunications commerciaux au niveau d'un transpondeur banalisé de la charge utile du satellite et,
- sur l'utilisation d'une base de temps commune synchronisée de préférence sur une base de temps externe comme celle d'un système de navigation par satellite (GPS) pour synchroniser les horloges locales de la station centrale et des stations de mesure et éventuellement pour synthétiser le signal de mesure de distance.

Plus précisément l'invention a pour objet un système de mesure de distance pour la localisation d'un satellite géostationnaire équipé d'un transpondeur, qui comprend :

- une station centrale émettrice d'un signal de mesure de distance,
- une (ou plusieurs) station(s) de mesure, réceptrice(s) dudit signal de mesure de distance, comportant des moyens de mesure du temps d'arrivée du signal émis par la station centrale et transmis via le transpondeur du satellite,

- la station centrale et les stations de mesure de position connues, comportant des moyens de synchronisation avec une base de temps commune,
- un centre de calcul de la position du satellite,
- des moyens de rapatriement des mesures des stations de mesure vers le centre de calcul.

Il est principalement caractérisé en ce que :

- le transpondeur est celui d'un système de télécommunications par satellite, et a une bande passante B,
- la station centrale comprend des moyens d'émission d'un signal spécifique de mesure de distance, distinct d'un signal de télécommunication, à évènements périodiques et à étalement de spectre, dont la bande passante est incluse dans B.

De cette façon, il n'y a pas de ressource satellite (bande de fréquence, puissance radio et matériels) dédiée à la fonction de mesure de distance.
De plus, on peut ainsi faire les mesures de distance et donc la localisation du satellite automatiquement (sans intervention de personnel) et de façon répétitive, toutes les secondes par exemple, pour augmenter la précision de localisation du satellite et de la restitution de l'orbite et pour accéder aux variations de position telles que les dérives et les vitesses de dérives.
En outre, les stations réceptrices sont bon marché car elles sont basées sur des composants électroniques grand public : antenne parabolique, LNB, ordinateur personnel, ...
Selon une caractéristique de l'invention, la densité spectrale de puissance est ajustée de façon que ce signal n'affecte pas la qualité de réception du signal de télécommunication.
Le signal de mesure de distance peut transporter un flux de données binaires, typiquement à bas débit c'est-à-dire inférieur à 1 kbit/s.
Selon un premier mode d'exploitation, la base de temps commune est celle d'un système de positionnement par satellites et les moyens de synchronisation de la station centrale et des stations de mesure comportent des moyens de réception de signaux de positionnement par satellites.
L'utilisation d'une base de temps commune synchronisée sur la base de temps d'un système de navigation par satellite comme le système GPS permet d'éviter d'équiper la station émettrice avec une horloge ultra précise telle qu'une horloge atomique qui est coûteuse, ce qui est néanmoins possible. Cela simplifie également les mesures des temps d'arrivée dans les stations réceptrices dont l'horloge locale est également synchronisée sur la base de temps dudit système de navigation par satellite.
Selon un autre mode d'exploitation, la station centrale comporte une horloge locale qui est la base de temps commune, et les moyens de synchronisation de la station centrale et des stations de mesure comportent des moyens d'émission et de réception d'un signal de transfert bidirectionnel par satellite d'informations horaires et de fréquence.
Selon une caractéristique de l'invention, les moyens de rapatriement des mesures vers le centre de calcul utilisent les moyens de transmission d'un réseau terrestre de télécommunication, tel que le réseau Internet ou un réseau de téléphonie mobile.
Selon une variante, les moyens de rapatriement des mesures utilisent le transpondeur du système de télécommunications par satellite et les stations de mesure ont des moyens de transmission d'un signal à étalement de spectre, dont la bande passante est incluse dans B et qui comporte un flux de données binaires incluant lesdites mesures, et la station centrale a des moyens de réception dudit signal pour récupérer les mesures et des moyens pour envoyer les mesures récupérées au centre de calcul.
Selon une caractéristique de l'invention, le signal de mesure émis par la station centrale vers la station de mesure déportée et le signal émis par la station de mesure déportée vers la station centrale peuvent comporter en outre les informations horaires et de fréquence.
La station centrale peut être aussi une station de mesure réceptrice.
Le système de télécommunications par satellite opère typiquement dans les bandes de fréquence allouées au Service de Radiodiffusion par Satellite ou au Service Fixe par Satellite ou au Service Mobile par Satellite.
Selon un mode de réalisation particulier, le centre de calcul comprend des moyens pour déterminer la position du satellite géostationnaire sur la base des mesures des temps d'arrivée faites par :

- au moins trois stations de mesure déportées de la station centrale ou
- au moins deux stations de mesure déportées de la station centrale et la station centrale, celle-ci étant aussi station de mesure.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement un système de télécommunications par satellite utilisé pour effectuer des mesures de distance du satellite, selon l'art antérieur,

la figure 2 représente schématiquement un système distribué de mesure de distance du satellite, selon un premier mode de réalisation de l'invention,

la figure 3 illustre schématiquement des exemples de densité spectrale de puissance des signaux qui se superposent dans le transpondeur et un exemple d'abaque permettant d'estimer la dégradation apportée par le signal de mesure de distance à un signal vidéo numérique,

la figure 4 représente schématiquement le principe de la mesure du temps d'arrivée des évènements périodiques contenus dans le signal de mesure de distance effectuée par une station de mesure déportée,

la figure 5 représente schématiquement les moyens mis en oeuvre dans la station centrale émettrice dans un premier mode de réalisation de l'invention,

la figure 6 représente schématiquement les moyens mis en oeuvre dans une station de mesure déportée dans un premier mode de réalisation de l'invention,

la figure 7 représente schématiquement un système distribué de mesure de distance du satellite, selon un deuxième mode de réalisation de l'invention,

la figure 8 représente schématiquement le principe de la synchronisation des horloges locales des stations de mesure déportées sur la base de temps commune dans un deuxième mode de réalisation de l'invention,

la figure 9 représente schématiquement les moyens mis en oeuvre dans la station centrale dans un deuxième mode de réalisation de l'invention,

la figure 10 représente schématiquement les moyens mis en oeuvres dans une station de mesure dans un deuxième mode de réalisation de l'invention,

la figure 11 illustre schématiquement un exemple de configuration géométrique associée à la détermination de la position du satellite par calculs de trilatérisation, dans le cas d'une station centrale et de trois stations de mesure déportées,

la figure 12 illustre schématiquement un exemple de configuration géométrique associée à la détermination de la position du satellite par calculs de trilatérisation, dans le cas d'une station centrale émettrice et réceptrice et de deux stations de mesure déportées.

D'une figure à l'autre, les mêmes éléments sont repérés par les mêmes références.

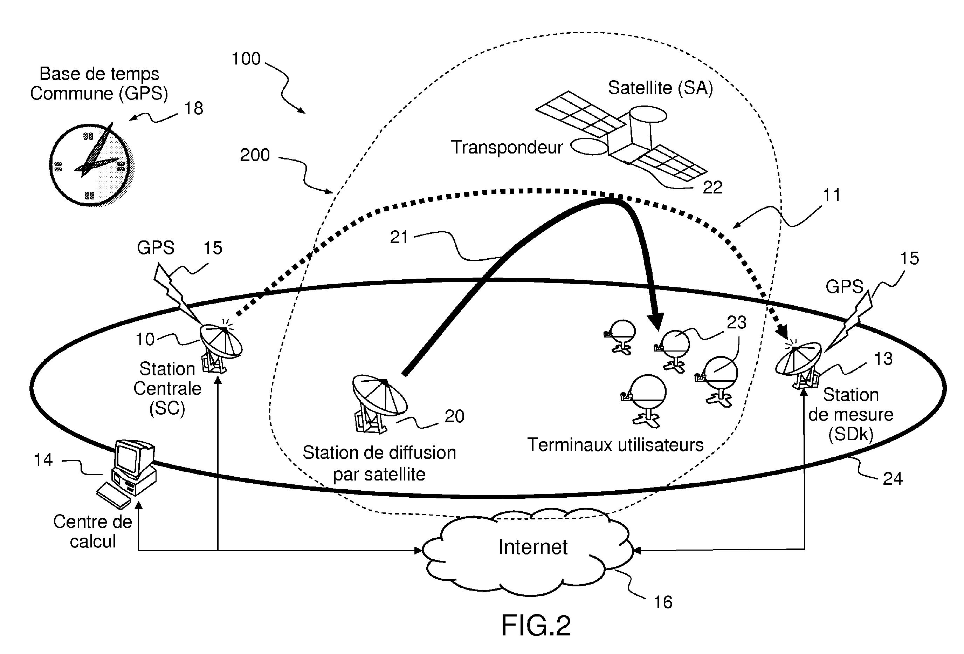

On décrit en relation avec la figure 2 le système de mesure de distance 100 selon l'invention selon un premier mode de réalisation.

Il comprend une station centrale émettrice 10 qui émet vers des stations de mesure déportées réceptrices 13 (une seule station de mesure est représentée sur la figure pour ne pas la surcharger) un signal 11 de mesure de distance à évènements périodiques et à étalement de spectre via le transpondeur 22 d'un satellite SA d'un système de télécommunications 200, dit transpondeur de télécommunication. Le système 100 selon l'invention utilise le transpondeur d'un autre système, en l'occurrence celui d'un système 200 de télécommunications par satellite. La station centrale émettrice 10 est distincte de celle 20 du système de télécommunications en ce sens que le signal 11 émis par la station 10 est distinct du signal de télécommunications 21 émis par la station 20. Les deux stations émettrices 10 et 20 peuvent éventuellement être localisées au même endroit.

Le signal de mesure de distance 11 est typiquement un code d'étalement récurrent tel qu'une séquence directe de longueur finie, modulant une porteuse radiofréquence. Eventuellement, le signal de mesure de distance 11 contient également un flux de donnée binaire à bas débit D(t) c'est-à-dire inférieur à 1 kbit/s, typiquement pour transporter des informations horaires et de fréquences comme on va le voir plus loin, ou pour transmettre des données auxiliaires comme des données relatives à l'état du système, des données de calibrations, des télécommandes de configuration de la station de mesure.... Ce signal de mesure de distance est spécifique de cette application ; il est distinct du signal de télécommunications 21 mais doit pouvoir être transmis par le transpondeur 22 de télécommunication. Son spectre occupe tout ou partie de la bande passante B du transpondeur de télécommunication. On a typiquement B compris entre 22 MHz et 72 MHz dans le cas d'un transpondeur d'un système de télécommunications par satellite opérant dans la bande Ku (10,7 GHz à 14,5 GHz).

Le dispositif de l'invention fonctionne aussi dans tout transpondeur d'un système de télécommunications par satellite fonctionnant dans les bandes de fréquence qui sont allouées par l'Union Internationale des Télécommunications (UIT) au Service Fixe par Satellite (SFS), au Service de Radiodiffusion par Satellite (SRS) et au Service Mobile par Satellite (SMS), et dont la bande passante B est suffisante pour étaler le signal de mesure de distance. Il est de préférence étalé de manière à ce que sa densité spectrale de puissance soit inférieure à la densité spectrale de puissance du bruit dudit transpondeur.

Différentes techniques d'étalement de spectre peuvent être utilisées. On peut citer l'étalement par séquence directe aussi désignée « pseudo noise (PN) spread » en langue anglaise, par saut de fréquence ou « frequency hopping » en langue anglaise ou par ultra large bande ou « ultra wide band » en langue anglaise. Dans un mode de réalisation préféré de l'invention, le signal de mesure de distance est un signal binaire bas débit étalé en fréquence par séquence directe récurrente de longueur finie ou également appelé code (« pseudorandom noise code » en anglais). La structure de ce signal R(t) peut être modélisée en fonction du temps t par :

$$R(t) = A(t)\ C(t)\ D(t)\ \sin(2\pi\ f_o + \Phi_o)$$

où A(t) est l'amplitude du signal, C(t) est la séquence directe récurrente de longueur finie ou code, D(t) est le flux de donnée système à bas débit, $f_o$ est la fréquence de la porteuse, $\Phi_o$ est la phase initiale de la porteuse.

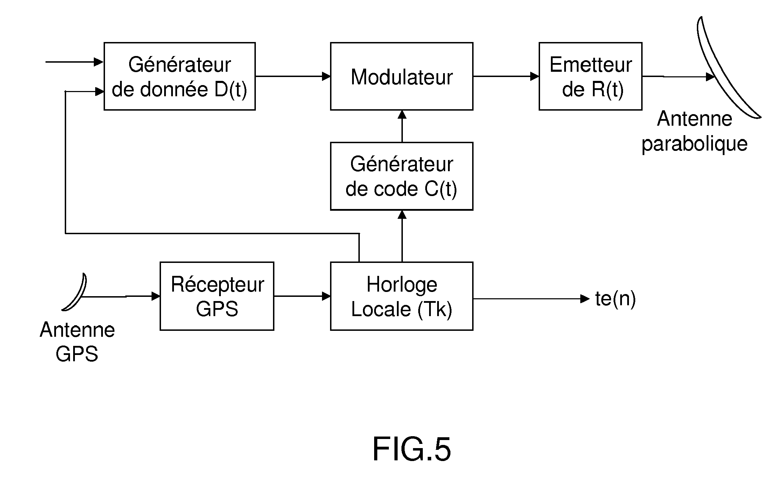

De plus comme montré figure 5, le signal de mesure de distance R(t) est transmis vers le satellite, avec une puissance d'émission et un étalement spectral tels que le rapport de la densité spectrale de puissance Ro du signal 11 sur la densité spectrale de puissance No du bruit thermique 24, rapport mesuré à l'entrée du transpondeur, soit tel que la dégradation « d » du rapport signal S à bruit N total des signaux commerciaux 11 de télécommunications soit négligeable. Le rapport signal à bruit total (S/N)t du signal de télécommunications 11 est égal à l'inverse de la somme des inverses des rapports signal à bruit (S/N)m de la liaison montante et (S/N)d de la liaison descendante. Comme la puissance radiofréquence du satellite est en général limitée, il est d'usage que le rapport signal à bruit (S/N)m de la liaison montante soit plus fort que le rapport signal à bruit (S/N)d de la liaison descendante dans un rapport z supérieur à 1 [ (S/N)m = z (S/N)d ]. La dégradation « d » du rapport signal à bruit total (S/N)t des signaux commerciaux 11 de télécommunications qui est apportée par la présence du signal de mesure de distance 11 est évaluée par la formule :

$$d = (z\ + 1)\ /\ (z + 1 + R_o/N_o)$$

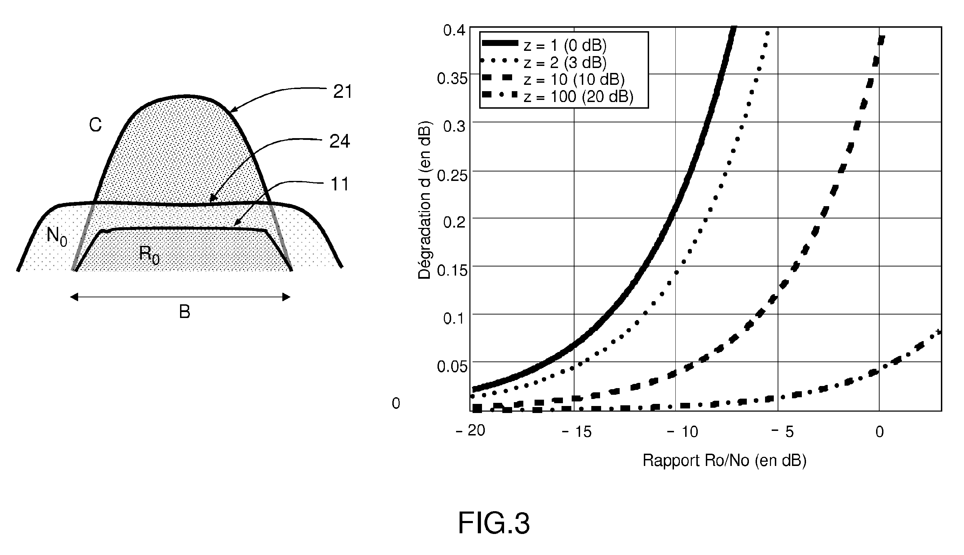

A titre d'illustration, la figure 3 donne la dégradation « d » induite du rapport signal à bruit total du signal de télécommunications 11 en fonction du rapport signal de mesure sur bruit Ro/No et du rapport z.

Ce signal 11 de mesure de distance peut éventuellement comporter un signal binaire D(t) bas débit véhiculant des informations auxiliaires destinées aux stations de mesure comme par exemple : le nom du satellite, la date, l'heure, la fréquence porteuse, des données de calibration, des données de maintenance, etc.

La forme d'onde (qui définit le signal) permet d'effectuer des mesures de distance précises et est synthétisée avec la base de temps commune 18 qui est dans un mode de réalisation préféré de l'invention synchronisée sur une référence de temps extérieure de type GPS par exemple.

De préférence, ce signal de mesure de distance R(t) est similaire à un signal de navigation de type GPS ou Galileo. Ainsi par exemple le signal de mesure de distance a les caractéristiques suivantes :

- C(t) signal d'étalement (séquence directe) au débit de 18 Mchip/s,
- D(t) signal binaire (flux d'information) au débit de 1000 bits par seconde,
- période de la séquence directe (évènement) : 1 milliseconde,
- modulation BPSK ou toute autre modulation de même type.

Le débit binaire du flux d'information D(t) est fixé en fonction des conditions de transmission sur la liaison station centrale émettrice 10 vers la station de mesure déportée 13 via le transpondeur 22 du satellite SA. En particulier le débit maximum est déterminé par la combinaison des valeurs de plusieurs paramètres des systèmes de télécommunications 200 et de mesure de distance 100, comme par exemple le rapport signal à bruit (S/N)t du signal de télécommunications 11, la dégradation « d », le rapport z, le facteur de mérite de la station de mesure, réceptrice (G/T)...

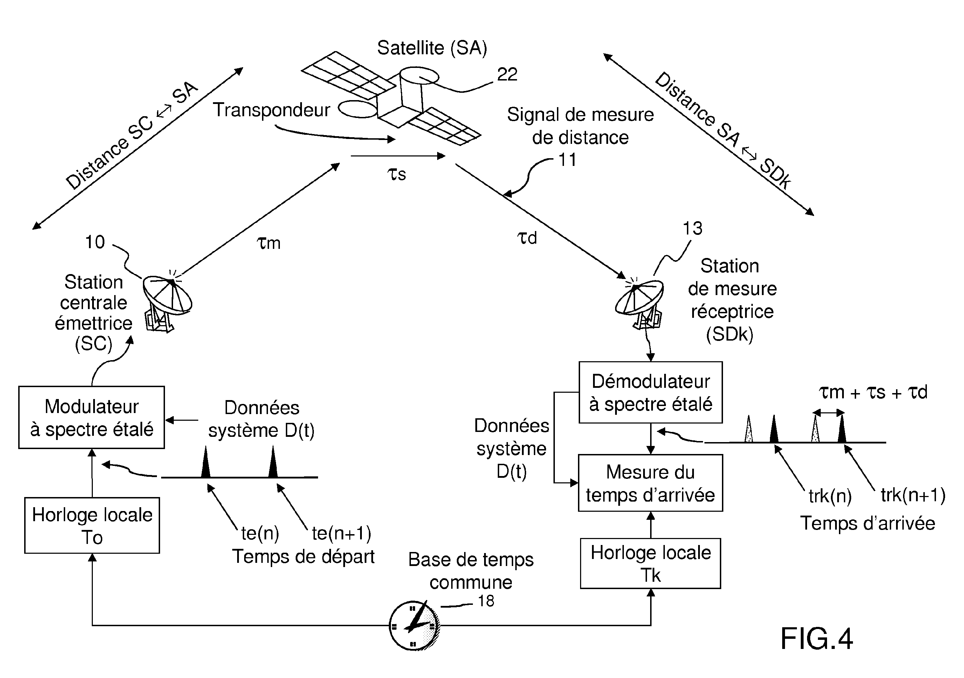

Le système 100 de mesure de distance comprend aussi au moins une station de mesure 13 généralement déportée de la station centrale 10. Chaque station de mesure 13 reçoit le signal de mesure de distance 11 qui est par exemple une séquence directe récurrente de longueur finie C(t). Elle comprend des moyens pour détecter et extraire le signal de mesure de distance superposé au signal de télécommunications 21 de manière classique connue de l'homme du métier, par corrélation avec une réplique locale de la séquence directe. De cette manière, le signal binaire bas débit D(t) est extrait du signal de télécommunications 21 et peut être ensuite démodulé par un matériel approprié comme illustré figure 4.

La séquence directe récurrente de longueur finie C(t) est utilisée pour faire la mesure du temps d'arrivée des événements périodiques qui sont dans ce mode de réalisation les débuts de la séquence directe. Le temps d'arrivée du début de la séquence directe est mesuré sur la base de l'horloge locale Tk de la station de mesure réceptrice 13 par un moyen approprié et connu de l'homme du métier.

La pseudo-distance (PD) entre la station émettrice et la station de mesure réceptrice via le satellite est donnée par la formule

$$PD = c \, [\, tr(n) - te(n)]$$

où c est la vitesse de la lumière, te(n) est le temps de l'émission du n-ième début du code mesuré avec l'horloge locale To de la station centrale émettrice et tr(n) est la mesure du temps d'arrivée du n-iéme début du code mesuré avec l'horloge locale Tk de la station déportée de réception k. Cette pseudo-distance est différente de la distance réelle car elle contient des erreurs. La principale erreur est due au biais entre l'horloge locale de la station émettrice et l'horloge locale de la station réceptrice [To - Tk]. La synchronisation de toutes les horloges locales sur une base de temps commune 18 permet de supprimer le biais ou d'en connaître la valeur et ainsi de supprimer ou réduire l'erreur sur la distance. Les autres erreurs sont connues ou mesurables et sont compensées par des moyens connus de l'homme du métier (effet Sagnac, non réciprocité en fréquence des temps de propagation, traversée de l'ionosphère...) .

Les horloges locales Tk des stations déportées 13 sont synchronisées avec l'horloge locale To de la station centrale 10 pour avoir une base de temps commune 18.

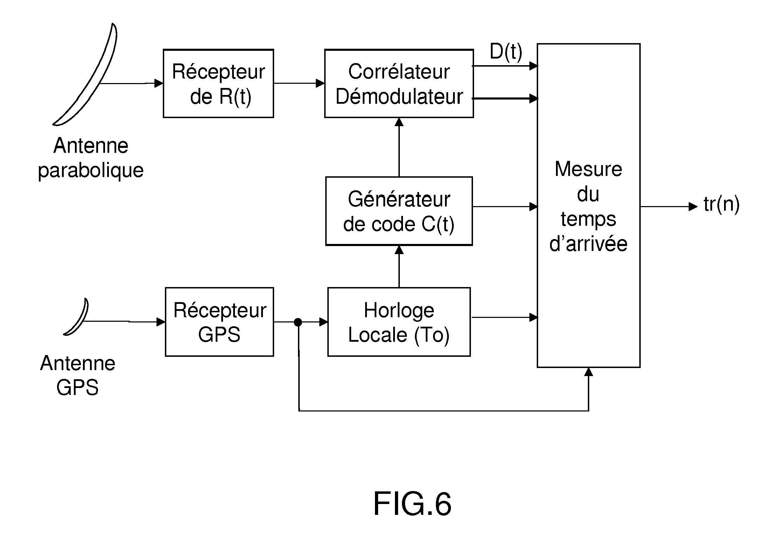

Cette synchronisation peut être obtenue en prenant une base de temps commune extérieure au système, comme par exemple le temps fourni par un système de positionnement par satellite tel que le système GPS ou Galileo. Les stations 10 et 13 sont alors équipées de moyens 15 de réception d'un signal de positionnement par satellite de type GNSS comme on peut respectivement le voir figures 5 et 6.

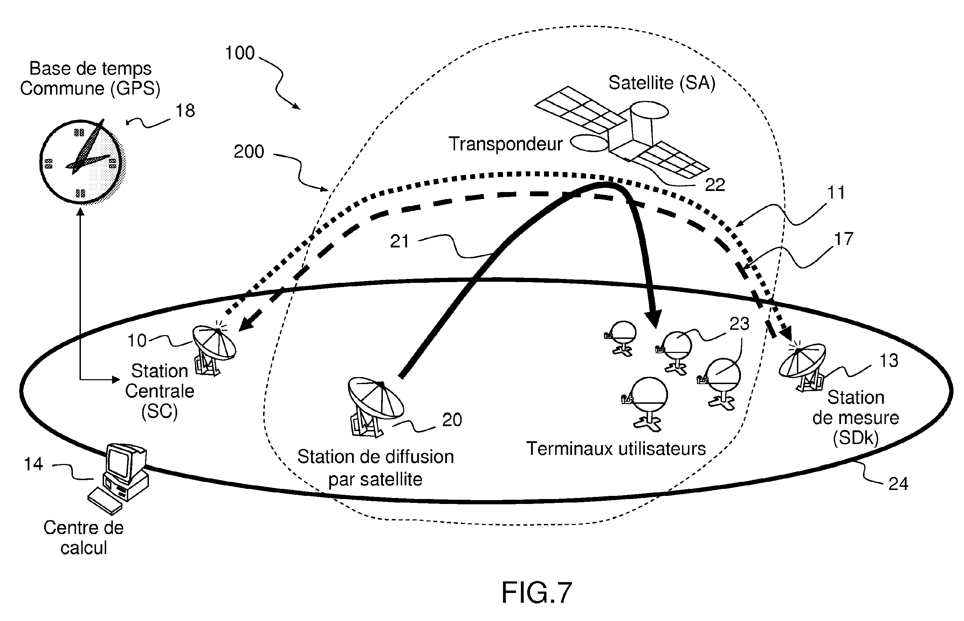

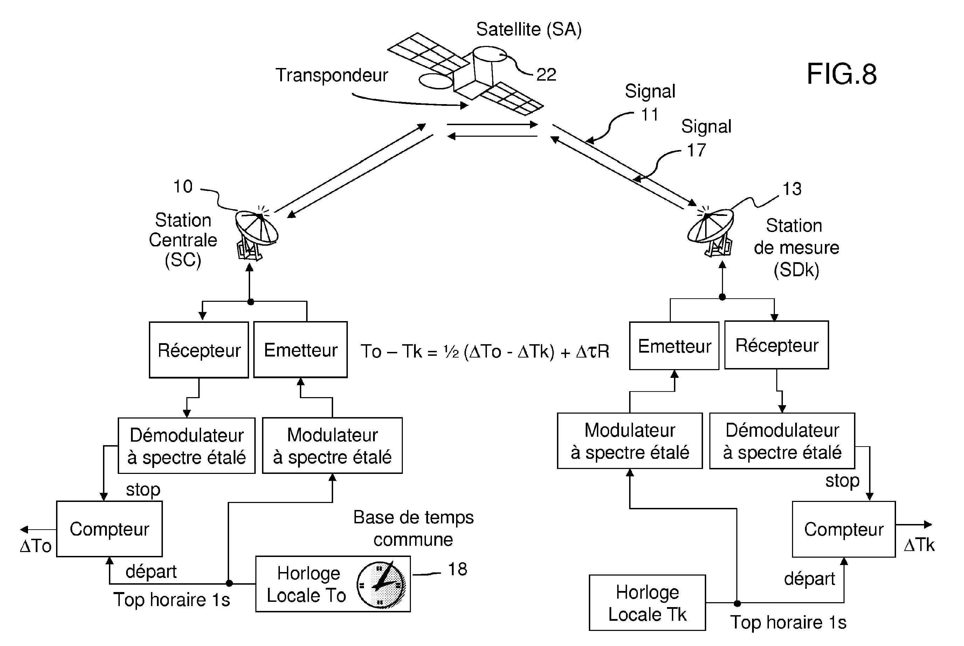

Une base de temps commune peut aussi être obtenue en équipant la station centrale 10 avec une horloge atomique. Cette horloge est la référence de la base de temps commune. Ce mode de réalisation de l'invention est illustré à la figure 7. Les stations 10 et 13 sont alors équipées par exemple de moyens de transfert bidirectionnel par satellite de signaux horaires et de fréquence (TWSTFT pour « Two-Way Satellite Time and Frequency Transfer » en anglais) comme montré figure 8. Les stations 10 et 13 sont des stations émission et réception pour cette fonctionnalité. Une synchronisation régulière de l'horloge locale de chaque station 13 avec l'horloge atomique de la station 10 est nécessaire pour garantir la précision de la mesure de distance.

Les signaux radiofréquences utilisés pour le transfert bidirectionnel par satellite de signaux horaires transiteront par le transpondeur 22 du satellite SA du système de télécommunications 200.

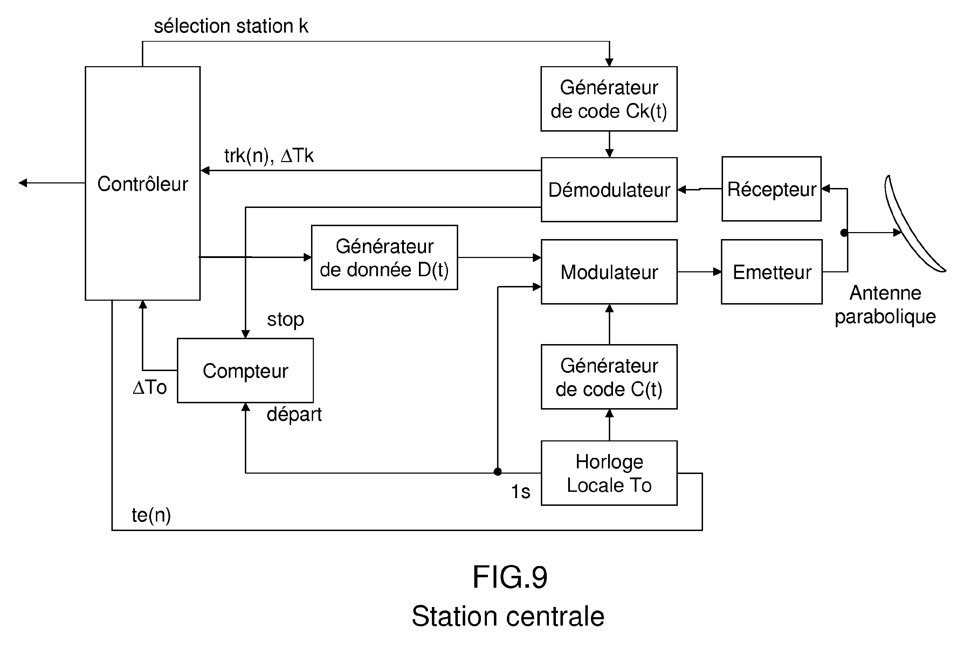

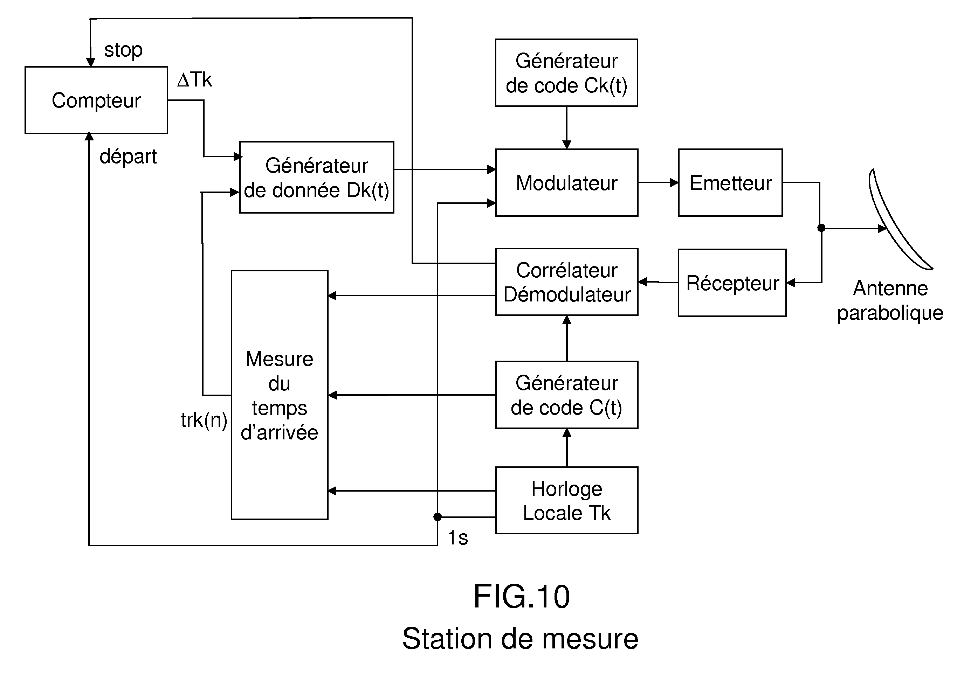

Les stations 10 et 13 comprennent des moyens d'émission et de réception d'un signal spécifique de transfert bidirectionnel par satellite de signaux horaires, que l'on peut voir figures 9 et 10, distinct d'un signal de télécommunication, à étalement de spectre, dont la bande passante est incluse dans B et dont la densité spectrale de puissance est de préférence ajustée de façon que ce signal n'affecte pas la qualité de réception du signal de télécommunication.

Le signal de transfert bidirectionnel par satellite d'informations horaires peut être confondu ou fusionné comme montré sur les figures 7 et 8, (mais pas nécessairement) :

-    dans le sens station centrale 10 vers station de mesure 13, avec le signal de mesure de distance émis 11 et
-    dans le sens station de mesure 13 vers station centrale 10, avec le signal 17 comportant les mesures.

La station centrale 10 et les stations de mesure 13 sont dans la couverture 24 du satellite SA de télécommunication.

Le système de mesure de distance 100 comprend également un centre de calcul 14 qui détermine la position du satellite SA, à partir des mesures des temps d'émission des événements te(n) par la station centrale 10 et des mesures du temps d'arrivée des événements trk(n) par les stations de mesure 13 ; chacune des stations de mesure envoie périodiquement les mesures de temps d'arrivée de l'événement périodique du signal de mesure de distance (le début de la séquence directe dans un des modes de réalisation de l'invention).

Le centre de calcul 14 calcule la distance entre la station centrale 10 et la k-ième station de mesure 13 via le satellite SA [SC-SA + SA-SDk]. Enfin le centre de calcul 14 calcule la position du satellite par des méthodes de trilatérisation bien connues.

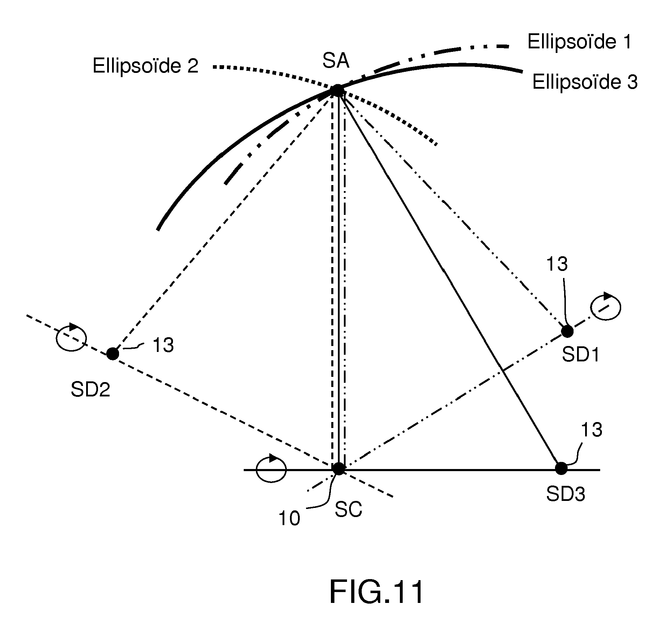

La figure 11 illustre schématiquement un exemple de configuration géométrique associée à la détermination de la position du satellite par calculs de trilatérisation, dans le cas d'une station centrale et de trois stations de mesure déportées de la station centrale. Le satellite SA est sur un ellipsoïde de révolution autour de l'axe reliant les deux foyers : station centrale SC de mesure de distance 10 et une station déportée SDk de mesure de distance 13. Avec trois mesures de distance par trois stations déportées SD1, SD2 et SD3 séparées, on calcule de manière classique la position du satellite SA qui est à l'intersection des trois ellipsoïdes. La position du satellite SA est d'autant plus précise que les ellipsoïdes sont distincts, c'est-à-dire lorsque les stations de mesure déportées 13 sont le plus écartées les unes des autres.

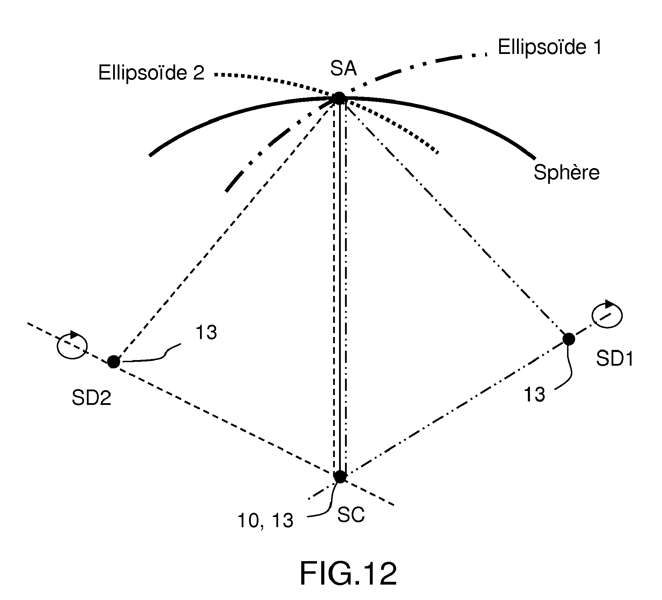

La figure 12 illustre schématiquement un exemple de configuration géométrique dans lequel la station centrale SC 10 est aussi une station de mesure 13. Le satellite SA est sur une sphère dont le rayon est la distance SC-SA et dont le centre est la station centrale SC. Avec deux mesures de distance par deux stations déportées SD1, SD2, on calcule de manière classique la position du satellite SA qui est à l'intersection de la sphère et des deux ellipsoïdes.

Le centre de calcul 14 peut être situé dans la station centrale 10 mais pas nécessairement ; dans ce cas, il lui est relié par des moyens classiques tels qu'un réseau terrestre de télécommunications (Internet, ligne téléphonique, ligne spécialisée, ... ).

Les mesures de temps d'arrivée trk(n) peuvent être envoyées par les stations de mesure déportées 13 à la station centrale 10 et/ou directement au centre de calcul 14, de différentes manières. Cela peut être par le réseau Internet 16 comme dans le premier mode de réalisation illustré à la figure 2 ou par radio-communication par satellite par le signal 17 comme dans le deuxième mode de réalisation illustrée à la figure 7. Dans ce dernier cas, les mesures peuvent être envoyées par un signal radio étalé en fréquence 17 (en pointillé sur la figure 7). Le signal radio 17 a alors les mêmes contraintes de bande passante et de niveau de densité spectrale de puissance que le signal de mesure de distance 11. Ce signal à bas débit Dk(t) est suffisant pour renvoyer les mesures des temps d'arrivée trk(n) et éventuellement des informations système telles que l'état de fonctionnement et de calibration de la station déportée SDk, et/ou les mesures de temps TK nécessaires à la synchronisation de l'horloge locale Tk avec l'horloge locale To de la station centrale dans le cas du deuxième mode de réalisation illustré figure 7.

**Revendications**

1. Système (100) de localisation du satellite géostationnaire (SA) d'un système de télécommunication par satellite (200) qui comprend :

    - au moins une station émettrice (20) de signaux de télécommunications (21),
    - à bord dudit satellite (SA), un transpondeur (22) ayant une bande passante B,
    - plusieurs stations réceptrices (23) des signaux de télécommunication,

    **caractérisé en ce que** le système de localisation comprend:

    - une station centrale (10) émettrice d'un signal spécifique (11) distinct des signaux de télécommunications (21), ce signal spécifique (11) comportant un flux de données binaires, étant à évènements périodiques, à étalement de spectre dont la bande passante est incluse dans B, et transmis via le transpondeur (22) du satellite de télécommunications (SA),
    - au moins trois stations de mesure (13) réceptrice du signal spécifique émis par la station centrale (10), comportant des moyens de mesure du temps d'arrivée du signal spécifique (11),
    - les stations centrale (10) et de mesure (13), de position connues, comportant des moyens de synchronisation avec une base de temps commune (18),
    - des moyens de rapatriement des mesures des stations de mesure (13) vers un centre de calcul (14),
    - un centre de calcul (14) de la position du satellite qui comprend des moyens pour déterminer la position du satellite géostationnaire (SA) sur la base des distances entre la station centrale (10) et chaque station de mesure (13) via le satellite, calculées à partir des mesures des temps d'arrivée faites par les stations de mesure (13).

2. Système de localisation selon la revendication 1, **caractérisé en ce que** la base de temps commune (18) est la base de temps d'un système de positionnement par satellites et **en ce que** les moyens de synchronisation de la station centrale (10) et des stations de mesure (13) comportent des moyens de réception de signaux de positionnement par satellites.

3. Système de localisation selon la revendication 1, **caractérisé en ce que** la station centrale (10) comporte une horloge locale qui est la base de temps commune (18) et **en ce que** les moyens de synchronisation de la station centrale (10) et des stations de mesure (13) comportent des moyens d'émission et de réception d'un signal de transfert bidirectionnel par satellite d'informations horaires et de fréquence.

4. Système de localisation selon l'une des revendications précédentes, **caractérisé en ce que** les moyens de rapatriement des mesures utilisent le transpondeur (22) du système (200) de télécommunications par satellite et **en ce que** les stations de mesure (13) ont des moyens de transmission d'un signal (17) à étalement de spectre, dont la bande passante est incluse dans B et qui comporte un flux de données binaires incluant lesdites mesures, et **en**

**ce que** la station centrale (10) a des moyens de réception dudit signal (17) pour récupérer les mesures et des moyens pour envoyer les mesures récupérées au centre de calcul (14).

5. Système de localisation selon les revendications 3 et 4 prises en combinaison, **caractérisé en ce que** le signal de transfert bidirectionnel de la station centrale (10) vers la station de mesure (13) est le signal spécifique émis (11) et, de la station de mesure (13) vers la station centrale (10) est le signal (17) incluant lesdites mesures, ces signaux (11, 17) comportant en outre les informations horaires et de fréquence.

6. Système de localisation selon les revendications précédentes, **caractérisé en ce que** la station centrale (10) est aussi une station de mesure réceptrice (13).

7. Système de localisation selon l'une des revendications précédentes, **caractérisé en ce que** le système (200) de télécommunications par satellite opère dans les bandes de fréquence allouées au Service de Radiodiffusion par Satellite ou au Service Fixe par Satellite ou au Service Mobile par Satellite.

Satellite (SA)

Transpondeur

22

200

21

EP 2 386 875 A1

23

20

Station de diffusion
par satellite

Terminaux utilisateurs

24

FIG.1

FIG.2

Degradation d (en dB)

0.4
0.35
0.3
0.25
0.2
0.15
0.1
0.05
0

z = 1 (0 dB)
z = 2 (3 dB)
z = 10 (10 dB)
z = 100 (20 dB)

-20   -15   -10   -5   0

Rapport Ro/No (en dB)

**FIG.3**

21
24
11

C
$R_0$
$N_0$
B

FIG.4

FIG.5

EP 2 386 875 A1

D(t)

Antenne parabolique → Récepteur de R(t) → Corrélateur Démodulateur

Générateur de code C(t)

Antenne GPS → Récepteur GPS → Horloge Locale (To)

Mesure du temps d'arrivée → tr(n)

FIG.6

Base de temps Commune (GPS)

18

100

200

Satellite (SA)

Transpondeur

22

11

17

21

10

Station Centrale (SC)

20

Station de diffusion par satellite

Terminaux utilisateurs

23

13

Station de mesure (SDk)

14

Centre de calcul

24

FIG.7

FIG.8

Satellite (SA)

Transpondeur

22

Signal 11

Signal 17

10

Station Centrale (SC)

13

Station de mesure (SDk)

Récepteur  Emetteur

$To - Tk = ½ (\Delta To - \Delta Tk) + \Delta \tau R$

Emetteur  Récepteur

Démodulateur à spectre étalé

Modulateur à spectre étalé

Modulateur à spectre étalé

Démodulateur à spectre étalé

stop

Compteur

$\Delta To$

départ

Top horaire 1s

Base de temps commune

Horloge Locale To

18

stop

Compteur

$\Delta Tk$

départ

Horloge Locale Tk

Top horaire 1s

EP 2 386 875 A1

sélection station k

Générateur
de code Ck(t)

Contrôleur

trk(n), ΔTk

Démodulateur ← Récepteur

Générateur
de donnée D(t)

Modulateur → Emetteur

Antenne
parabolique

stop

Compteur

ΔTo

départ

Générateur
de code C(t)

1s

Horloge
Locale To

te(n)

FIG.9

Station centrale

stop

Compteur  ΔTk

départ

Générateur
de donnée Dk(t)

trk(n)

Mesure
du
temps
d'arrivée

Générateur
de code Ck(t)

Modulateur

Emetteur

Corrélateur
Démodulateur

Récepteur

Antenne
parabolique

Générateur
de code C(t)

Horloge
Locale Tk

1s

FIG.10

Station de mesure

FIG.11

EP 2 386 875 A1

FIG.12

Europäisches
Patentamt

European
Patent Office

Office européen
des brevets

# RAPPORT DE RECHERCHE EUROPEENNE

Numéro de la demande

EP 11 16 3926

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 041 833 A (WEINBERG AARON [US]) 20 août 1991 (1991-08-20) * colonne 2, ligne 4-7, 14-15; figures 1,3b, 4,5,12 * * colonne 4, ligne 27-33 * * colonne 5, ligne 57-64 * * colonne 7, ligne 28-31 * * colonne 11, ligne 64-65 * ----- | 1-7 | INV. G01S13/87 B64G1/24 H04B7/185 |
| X | US 6 864 838 B2 (HARLES GUY [LU] ET AL) 8 mars 2005 (2005-03-08) * colonne 1, ligne 33-35 * * colonne 5, ligne 56-58 * * colonne 6, ligne 11-12 * * colonne 8, ligne 48-53 * * colonne 7, ligne 25-31 * * colonne 15, ligne 8-12 * * figures 2,3 * ----- | 1-3,5-7 | |
| X | FR 2 621 132 A1 (EUROP AGENCE SPATIALE [FR]) 31 mars 1989 (1989-03-31) * page 4, ligne 16 - page 6, ligne 12; figures 1,3,5,6 * * page 8, ligne 32-36 * * page 9, ligne 25-32 * ----- -/-- | 1 | DOMAINES TECHNIQUES RECHERCHES (IPC) G01S B64G H04B |

Le présent rapport a été établi pour toutes les revendications

| Lieu de la recherche | Date d'achèvement de la recherche | Examinateur |
|---|---|---|
| Munich | 29 août 2011 | Kern, Olivier |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 11 16 3926

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | "Satellite Earth Stations and Systems (SES); Technical analysis of Spread Spectrum Solutions for Telemetry Command and Ranging (TCR) of Geostationary Communications Satellites; ETSI TR 101 956", ETSI STANDARDS, LIS, SOPHIA ANTIPOLIS CEDEX, FRANCE, vol. SES-ECSS, no. V1.1.1, 1 septembre 2001 (2001-09-01), XP014005037, ISSN: 0000-0001 * pages 12-17 * * pages 44-45 * ----- | 1 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 29 août 2011 | Kern, Olivier |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
    ......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 16 3926

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-08-2011

| Document brevet cité au rapport de recherche | | Date de publication | Membre(s) de la famille de brevet(s) | | Date de publication |
|---|---|---|---|---|---|
| US 5041833 | A | 20-08-1991 | AUCUN | | |
| US 6864838 | B2 | 08-03-2005 | AT | 465422 T | 15-05-2010 |
| | | | AU | 779739 B2 | 10-02-2005 |
| | | | AU | 2802900 A | 29-08-2000 |
| | | | BR | 0008073 A | 13-02-2002 |
| | | | CA | 2362067 A1 | 17-08-2000 |
| | | | DK | 1026519 T3 | 16-08-2010 |
| | | | WO | 0048018 A1 | 17-08-2000 |
| | | | EP | 1026519 A1 | 09-08-2000 |
| | | | ES | 2345021 T3 | 13-09-2010 |
| | | | HK | 1026480 A1 | 23-07-2010 |
| | | | JP | 2002536672 A | 29-10-2002 |
| | | | PT | 1026519 E | 26-07-2010 |
| | | | US | 2002080070 A1 | 27-06-2002 |
| FR 2621132 | A1 | 31-03-1989 | AUCUN | | |

EPO FORM P0460

Pour tout renseignement concernant cette annexe : voir Journal Officiel de l'Office européen des brevets, No.12/82

**EP 2 386 875 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6864838 B